# FASCICULE DE BREVET EUROPEEN

(11) **EP 0 611 210 B1**
(45) Date de publication et mention de la délivrance du brevet: **26.11.1997**
(21) Numéro de dépôt: 94400281.5
(22) Date de dépôt: 09.02.1994
(51) Int. Cl.: G06F 11/00

(54) **Procédé d'administration d'applications avec des protocoles standards**
Verfahren zur Verwaltung von Anwendungen mit Standardprotokollen
Method for managing applications with standard protocols

(30) Priorité: 10.02.1993 FR 9301446
(43) Date de publication de la demande: 17.08.1994
(73) Titulaire: BULL S.A., 92800 Puteaux (FR)
(72) Inventeur: Attal, Denis, F-92320 Chatillon (FR)

(56) Documents cités:
- US-A- 4 589 068
- PROCEEDINGS OF THE WINTER 1990 USENIX CONFERENCE, Janvier 1990, WASHINGTON, US pages 41 - 52 P. MAYBEE 'pdb: A Network Oriented Symbolic Debugger'
- PROCEEDINGS OF THE WINTER 1991 USENIX CONFERENCE, Janvier 1991, DALLAS, US pages 243 - 252 R. FAULKNER ET AL. 'The Process File System and Process Model in UNIX System V'
- SOFTWARE PRACTICE & EXPERIENCE., vol.18, no.12, Décembre 1988, CHICHESTER GB pages 1179 - 1190, XP000118971 J. GRIFFIN ET AL. 'A Debugger for Parallel Processes'
- PROCEEDINGS OF THE NETWORK OPERATIONS AND MANAGEMENT SYMPOSIUM, vol.2, Avril 1992, IEEE, NEW YORK, US pages 566 - 578, XP000344723 G. MANSFIELD 'Network Management in a Large-Scale OSI-based Campus Network'

## Description

La présente invention concerne un procédé d'administration d'une application par un système d'administration d'objets dans un réseau selon un protocole administratif, l'exécutable de l'application contenant la table des symboles de l'application.

La vocation d'un système d'administration d'objets est de permettre de gérer, efficacement et aisément, dans un réseau un ensemble de ressources informatiques très diverses en les manipulant comme des objets. Le savoir-faire actuel concerne l'administration d'un réseau ou de ressources en réseau portant sur les équipements de télécommunication ainsi que sur les ordinateurs. Ainsi, pour aider à la gestion d'un certain nombre d'équipements, des dispositifs ou mécanismes existent déjà permettant d'obtenir des informations sur les systèmes de communication : les ponts, les routeurs, les multiplexeurs, les couches de communication des ordinateurs, etc... Pour autoriser une telle gestion, un dialogue est établi par l'intermédiaire d'un protocole administratif standard déterminé et au travers du réseau au moyen de requêtes émises par le système d'administration vers les diverses ressources informatiques et de réponses à ces requêtes rendues par les ressources informatiques concernées vers le système d'administration. Pour permettre ce dialogue, sur chaque ressource informatique est implanté un dispositif de traitement de l'information spécialement prévu pour faciliter l'exécution de cette tâche. Ce dispositif est en fait le correspondant du système d'administration sur l'équipement supportant la ressource informatique à administrer, c'est lui qui va exécuter pour le compte du système d'administration distant les différents ordres. Ces dispositifs sont de différentes natures suivant le modèle d'objets administratifs qu'ils supportent et le protocole administratif qu'ils utilisent pour communiquer avec le système d'administration. Un exemple d'un tel dispositif est fourni par l'agent SNMP (Simple Network Management Protocol) dont une utilisation est décrite dans le document PROCEEDINGS OF THE NETWORK OPERATIONS AND MANAGEMENT SYMPOSIUM, Vol. 2, Avril 1992, IEEE, NEW YORK, US, pages 566-578, G. MANSFIELD.

Cependant, en dehors des dispositifs précédemment cités, il n'existe pas de mécanismes permettant de gérer des applications s'exécutant sur les différents ordinateurs et ces dernières ne sont, par conséquent, actuellement, pas administrées. Or ce besoin qui est né pratiquement dès l'apparition de l'administration des systèmes est de plus en plus ressenti, notamment en ce qui concerne les applications dialoguant dans les réseaux (base de données, messagerie, etc...) de même que les applications spécifiques à l'entreprise (gestion des commandes, échanges entres sites ou filiales, etc...). Une question se pose alors : comment collecter des informations relatives à des applications qui ne sont pas nécessairement de manière effective sur la ressource à administrer ? Un début de réponse consiste à prévoir d'intégrer un agent lors du développement d'une application. En effet, de manière générale, rendre une ressource administrable revient à la connaître et à créer des moyens d'accès pour la rendre contrôlable au travers d'un agent. Ainsi, lorsqu'il s'agit d'un système d'exploitation, l'accès est habituellement documenté et lorsqu'une information n'est pas disponible au travers d'un appel système il est généralement possible d'aller lire ladite information dans la mémoire même du système avec une table des symboles donnant la correspondance entre une variable et son adresse en mémoire. Par contre pour les applications, il n'y a aujourd'hui aucun moyen externe pour un agent de collecter de l'information et il est à remarquer que la tendance actuelle n'est pas d'offrir de tels accès. De toute manière une autre question fondamentale se pose : comment administrer des applications qu'il n'est pas désiré ou qu'il n'est pas possible de modifier ?

La présente invention telle que définie dans la revendication 1 a pour but de combler cette lacune et propose un procédé d'administration d'une application qui autorise une gestion efficace et aisée d'une quelconque application dont l'exécutable contient la table des symboles et ceci sans qu'il soit nécessaire de modifier en quoique ce soit ladite application.

Pour cela, le procédé d'administration d'une application par un système d'administration d'objets mentionnés dans le préambule est remarquable en ce qu'en premier lieu, un dispositif de traitement de l'information appelé agent est créé en conformité avec le protocole administratif, cet agent étant paramétrable au moyen d'un fichier de configuration contenu dans l'agent, et, par l'intermédiaire d'une part de la table des symboles de l'application donnant la correspondance entre le nom d'une variable et son implantation en mémoire et d'autre part de l'appel d'une fonction système utilisée dans les processus d'analyse permettant de tracer l'exécution et de contrôler le traitement de l'application, ledit agent une fois créé accède directement à la zone mémoire dont l'implantation est donnée par la table des symboles permettant ainsi d'opérer le traitement adéquat relativement à l'application en fonction des requêtes du système d'administration.

Ainsi la démarche inventive a c:onsisté non seulement à poser le problème technique à résoudre mais également à fournir une solution efficace, élégante et aisée à mettre en oeuvre. En effet, il a été capital de considérer qu'il était uniquement possible d'agir sur l'exécutable de l'application et donc d'agir sur la mémoire même de l'application. En outre, une fois le problème clairement posé, il a été fondamental de raisonner de manière analogique en comparant deux domaines a priori complètement déconnectés, le domaine de l'administration des systèmes informatiques et celui des débogueurs, pour créer un agent utilisé de manière naturelle pour l'administration des ressources mais se comportant comme un débogueur, un débogueur étant, de manière ccnnue, un mécanisme qui permet de suivre l'exécution d'une application. A cet effet, comme le document PROCEEDINGS OF THE WINTER 1991 USENIX CONFERENCE, 1^{er} Janvier 1991 Dallas, US, pages 243-252, R. FAULKNER et AL., décrit une technique de débogage faisant appel au système UNIX/proc. cela est réalisé dans un processus de débogage, une des fonctions système utilisée dans les processus d'analyse est appelée pour permettre de tracer l'exécution et de contrôler le traitement de l'application en allant lire les informations dans les zones adéquates de la mémoire indiquées dans la table des symboles. Dans cette analogie, les fonctions SET ou GET exécutées dans un système d'administration correspondent respectivement à la lecture d'une variable ou à la modification du contenu d'une variable. De cette manière une application contenant sa table des symboles peut être instrumentée et donc directement administrée sans être modifiée par l'intermédiaire de l'agent créé qui permet de piloter ladite application.

De manière remarquable l'agent doit être créé en conformité avec le protocole administratif effectivement utilisé. Pour cela, dans une première étape l'application est modélisée sous forme d'un ensemble d'objets administratifs (objet + attributs). Dans une seconde étape l'agent est codé comme une interface particulière de l'application autorisant le dialogue portant sur les objets administratifs (objet + attributs) entre le système d'administration et l'application concernée. L'agent a ainsi la charge d'une part de faire la correspondance entre l'application et sa représentation objet sachant que le système d'administration ne connait que cette dernière et d'autre part de transmettre les requêtes en provenance du système d'administration vers l'application ainsi que les réponses à ces requêtes de l'application vers le système d'administration. Dans une troisième étape la description des objets administratifs est présentée au système d'administration dans le langage défini à cet effet, cette description d'objets étant stockée dans le fichier de configuration contenu dans l'agent créé.

Selon un exemple préféré le procédé d'administration d'une application par un système d'administration est utilisé pour une application tournant sur un système UNIX (marque déposée de UNIX System Laboratories Inc.). Dans ce cas, l'agent pourra correspondre à, selon la terminologie, un processus "père" alors que l'application elle-même correspond à un processus "fils" qui sera lancé par le processus "père". Ainsi aucune perturbation n'est introduite, il suffit pour cela de créer un agent processus "père" et de l'intercaler pour commander le lancement de l'application. Puis grâce à un appel système connu du type UNIX "PTRACE" et à la table des symboles de l'application l'agent va pouvoir agir sur le processus "fils" dès qu'il reçoit une requête en provenance du système d'administration. Diverses actions peuvent être effectuées et en se rappelant de l'analogie précitée, on peut faire ainsi correspondre : à une lecture de variable la fonction GET, à la modification du contenu d'une variable la fonction SET, à une action sur l'application comme un blocage, un redémarrage, un point d'arrêt, etc..., une fonction EVENT ou ACTION.

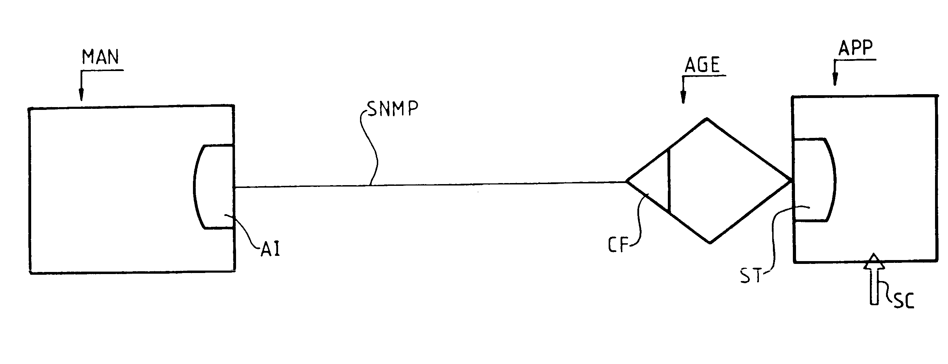

La description suivante en regard du dessin annexé, le tout donné à titre d'exemple non limitatif, fera bien comprendre comment l'invention peut être réalisée.

La figure représente un exemple d'administration d'une application APP par un système d'administration MAN, l'exécutable de l'application contenant la table des symboles ST. D'une manière générale, les systèmes d'administration de même que les agents utilisés pour le dialogue avec les systèmes MAN sont basés sur un modèle d'objets administratifs qui permet de représenter le monde réel (systèmes, logiciels de communication, etc...) au moyen d'objets abstraits organisés dans des bases d'informations d'administration.

Pour une meilleure compréhension du contexte, le système MAN, qui peut être quelconque, de manière schématique peut être réduit à l'utilisation de trois ou quatre fonctions : la fonction GET pour la lecture d'une information, la fonction SET pour le réglage d'un certain nombre de paramètres, la fonction EVENT pour la réception et la transformation d'événements et parfois la fonction ACTION pour le lancement de commandes, pour le déclenchement d'un certain nombre d'actions. Entre le système MAN et la ressource à gérer, dans le présent exemple d'application APP, doivent donc circuler les différentes fonctions précitées qui vont porter sur la modélisation de l'application APP. Cependant, comme cela a été précédemment dit, une application n'est pas directement administrable par le système MAN qui lui-même est constitué également d'un certain nombre d'applications, si elle n'a pas été préalablement prévue pour cela ce qui est jusqu'à présent le cas, et s'il n'est pas désiré la modifier ce qui correspond à la très grande majorité des cas. En effet, pour des raisons de protection, une application ne peut aller lire ou modifier une autre application. L'idée directrice de l'invention a été de transposer ce problème insoluble dans le domaine de l'administration au domaine a priori déconnecté des débogueurs car en effet, il existe un mécanisme capable de piloter et de suivre l'exécution d'une application : le débogueur. Le débogueur peut suivre l'état d'exécution d'un traitement, faire éventuellement du pas à pas, positionner un certain nombre de paramètres de contrôle, placer des points d'arrêt, lire des variables et éventuellement modifier leur contenu ce qui peut être avantageusement comparé à l'exécution des fonctions GET, SET, EVENT, ACTION. Pour matérialiser cette idée dans le domaine de l'administration, il est proposé selon la présente invention de créer un agent qui permette d'utiliser la technique d'un débogueur.

Ainsi, et de manière non limitative, dans l'exemple choisi, le système MAN peut être constitué d'un jeu d'applications utilisant les opérations du modèle OSI CMIS (Common Management Information Service) pour manipuler les objets supportés par un agent AGE créé spécialement, par exemple un agent SNMP (Simple Network Management Protocol) conçu sur un modèle d'objets déterminé. De manière habituelle et selon l'exemple choisi, l'agent SNMP communique avec le système MAN par l'intermédiaire d'un agent intégrateur AI, ici donc également du type SNMP, qui convertit l'objet ou les opérations SNMP spécifiques en un modèle d'objet ou des opérations CMIS standards. De cette façon, les opérations CMIS nécessaires à l'exécution de requêtes émises par des applications du système MAN sont converties en opérations SNMP et transmises vers l'agent SNMP concerné. De même, quand une réponse est reçue, elle est également convertie en une réponse à une opération CMIS correspondante et renvoyée vers l'application concernée dans le système MAN.

L'agent AGE est créé en conformité avec le protocole administratif standard SNMP et substantiellement suivant les trois étapes suivantes. Dans la première étape l'application APP est modélisée sous forme d'un ensemble d'objets administratifs du modèle SNMP, dans la seconde étape son codage est effectué créant ainsi l'interface pour le dialogue portant sur les objets administratifs entre les applications du système MAN et l'application APP tandis que dans la troisième étape la description des objets administratifs est présentée au système MAN au moyen d'un fichier de configuration CF contenu dans l'agent. Le fichier de configuration CF doit avantageusement comporter la liste des variables, la liste des objets et la correspondance entre variables et objets. L'agent est paramétrable grâce à ce fichier de configuration CF, la description de l'application doit être la plus complète et la plus précise possible pour apporter une grande efficacité au dit agent. La capacité de gestion et donc la puissance du système MAN sont directement liées à l'efficacité de l'agent AGE.

Une fois l'agent créé, au moyen d'une part de la table des symboles ST de l'application donnant la correspondance entre le nom d'une variable et son implantation en mémoire et d'autre part d'un appel d'une fonction système SC du type processus d'analyse, l'agent peut piloter et contrôler l'exécution de l'application. Dans un mode d'utilisation préféré du procédé d'administration, l'application tourne sur un système UNIX. En conservant toujours présente à l'esprit l'analogie précédente, et sachant que dans le monde UNIX une condition essentielle pour qu'un débogueur utilisant un mécanisme du type PTRACE puisse opérer est qu'il doit être le "père" du processus à contrôler, il sera d'autant mieux apprécié pourquoi le procédé selon l'invention est aussi bien adapté à la gestion d'une application tournant sous UNIX. En effet l'agent AGE correspond alors à un processus "père" et l'application APP à un processus "fils" lancé par le processus "père". L'agent peut alors, à l'aide d'un appel système "PTRACE" tracer l'exécution et contrôler le traitement de l'application. Il lui est alors possible d'accéder à la zone mémoire dont l'implantation est donnée dans la table des symboles de l'application et d'opérer le traitement adéquat (lecture, modification, etc...) en fonction des requêtes du système MAN, ledit agent transmettant en retour vers le système MAN les réponses aux requêtes ainsi obtenues. Ainsi, toute application pouvant être déboguée peut à présent également être administrée sans avoir été prévue à cet effet et sans pour autant être en aucun cas modifiée.

Pour conclure, alors que l'administration d'une application n'était ni prévue ni possible auparavant, le procédé d'administration d'une application décrit dans la présente invention peut être avantageusement utilisé pour l'administration d'un composant application quelconque sans avoir à le modifier, il suffit que l'exécutable de l'application contienne la table des symboles. En outre, le fait d'imaginer une analogie entre les deux domaines essentiellement différents que sont le domaine de l'administration des réseaux et le domaine de la mise au point ou débogage d'un logiciel a permis de poser clairement ce problème technique rencontré et d'apporter une solution originale, efficace et aisée à mettre en oeuvre. En effet, la table des symboles utilisée et l'appel d'une fonction système du type processus d'analyse sont des éléments conçus originellement pour le débogage, de même que, dans le monde UNIX lorsque le mécanisme du type PTRACE est utilisé, le fait de créer un agent et de l'intercaler pour commander le lancement et contrôler l'exécution de l'application est un moyen astucieux utilisé avec la mise en oeuvre de débogueurs. L'agent créé pour la mise en oeuvre du présent procédé est générique car il permet d'accéder à n'importe quel type d'application, alors que le fichier de configuration qu'il contient le rend paramétrable. Enfin il est à constater que cet agent est d'autant plus efficace et efficacement utilisé par le système d'administration que la description de l'application dans son fichier de configuration est complète et précise.

## Revendications

1. Procédé d'administration d'une application par un système d'administration d'objets dans un réseau selon un protocole administratif, l'exécutable de l'application contenant la table des symboles de l'application, caractérisé en ce que en premier lieu, un dispositif de traitement de l'information appelé agent est créé en conformité avec le protocole administratif, cet agent étant paramétrable au moyen d'un fichier de configuration contenu dans l'agent, et, par l'intermédiaire d'une part de la table des symboles de l'application donnant la correspondance entre le nom d'une variable et son implantation en mémoire et d'autre part d'un appel d'une fonction système utilisée dans les processus d'analyse permettant de tracer l'exécution et de contrôler le traitement de l'application, ledit agent une fois créé accède directement à la zone mémoire dont l'implantation est donnée par la table des symboles permettant ainsi d'opérer le traitement adéquat relativement à l'application en fonction des requêtes du système d'administration.

2. Procédé d'administration d'une application par un système d'administration selon la revendication 1, caractérisé en ce que pour créer l'agent en conformité avec le protocole administratif, dans une première étape l'application est modélisée sous forme d'un ensemble d'objets administratifs, dans une seconde étape est effectué le codage dudit agent selon une interface autorisant le dialogue portant sur les objets administratifs entre le système d'administration et l'application concernée alors que dans une troisième étape la description des objets administratifs est présentée au système d'administration au moyen du fichier de configuration contenu dans l'agent.

3. Procédé d'administration d'une application par un système d'administration selon la revendication 1 ou 2, caractérisé en ce que le fichier de configuration contenu dans l'agent créé comporte la liste des variables, la liste des objets et la correspondance entre variables et objets.

4. Utilisation du procédé selon l'une des revendications précédentes, l'application tournant sur un système UNIX, l'agent une fois créé, commandant le lancement de l'application à administrer, l'agent correspondant alors à un processus "père" alors que l'application elle-même correspond à un processus "fils" lancé par le processus "père", puis par l'intermédiaire de la table des symboles et d'un appel système du type UNIX PTRACE, l'agent opèrant le traitement désiré à l'application.

## Patentansprüche

1. Verfahren zur Verwaltung einer Anwendung durch ein System zur Verwaltung von Objekten in einem Netzwerk nach einem Verwaltungsprotokoll, wobei das ausführbare Programm der Anwendung die Tabelle der Symbole der Anwendung enthält, dadurch gekennzeichnet, daß in erster Linie eine Verarbeitungsvorrichtung für die Information, ein sogenannter Agent, in Entsprechung zu dem Verwaltungsprotokoll erzeugt wird, wobei dieser Agent mittels einer in dem Agenten enthaltenen Konfigurationsdatei parametrierbar ist, und dieser Agent nach seiner Erzeugung einerseits über die Tabelle der Symbole der Anwendung, die die Zuordnung zwischen dem Namen einer Variablen und ihrem Speicherplatz angibt, und andererseits über den Aufruf einer Systemfunktion, die bei den Analyseprozessen verwendet wird, die die Ausführung der Anwendung verfolgen und ihre Verarbeitung kontrollieren können, direkt auf die Speicherzone zugreift, deren Stelle durch die Tabelle der Symbole angegeben ist, womit die Durchführung der geeigneten Verarbeitung bezüglich der Anwendung in Abhängigkeit von den Anforderungen des Verwaltungssystems möglich wird.

2. Verfahren zur Verwaltung einer Anwendung durch ein Verwaltungssystem nach Anspruch 1, dadurch gekennzeichnet, daß die Anwendung zur Erzeugung des Agenten in Entsprechung mit dem Verwaltungsprotokoll in einem ersten Schritt in Form einer Gruppe von aus Verwaltungsobjekten modellhaft dargestellt wird, in einem zweiten Schritt die Codierung des Agenten nach einer Schnittstelle durchgeführt wird, die den Dialog über die Verwaltungsobjekte zwischen dem Verwaltungssystem und der betreffenden Anwendung zuläßt, während in einem dritten Schritt die Beschreibung der Verwaltungsobjekte mittels der in dem Agenten enthaltenen Konfigurationsdatei dem Verwaltungssystem präsentiert wird.

3. Verfahren zur Verwaltung einer Anwendung durch ein Verwaltungssystem nach Anspruch 1 oder 2, dadurch gekennzeichnet, daß die in dem erzeugten Agenten enthaltene Konfigurationsdatei die Liste der Variablen, die Liste der Objekte und die Zuordnung zwischen Variablen und Objekten enthält.

4. Verwendung des Verfahrens nach einem der vorhergehenden Ansprüche, wobei die Anwendung auf einem UNIX-System läuft, wobei der Agent nach der Erzeugung den Start der zu verwaltenden Anwendung steuert, wobei der Agent dann einem "Vater"-Prozeß entspricht, während die Anwendung selbst einem "Sohn"-Prozeß entspricht, der von dem "Vater"-Prozeß gestartet wird, und wobei der Agent dann über die Tabelle der Symbole und einen Systemaufruf des Typs UNIX PTRACE die gewünschte Verarbeitung an der Anwendung durchführt.

## Claims

1. Method for administering an application by an objects administration system within a network according to an administrative protocol, the executable of the application containing the table of symbols of the application, characterised in that, in the first place, an information processing device known as an agent is created in accordance with the administrative protocol, it being possible to assign parameters to this agent by means of a configuration file contained within the agent and, via on the one hand the table of symbols of the application giving the correspondence between the name of a variable and its memory location, and on the other hand a calling up of a system function used in the analysis processes making it possible to plot the execution and monitor the processing of the application, said agent, once created, directly accesses the memory zone, the location of which is given by the table of symbols, thus making it possible to effect appropriate processing in relation to the application, as a function of the requests from the administration system.

2. Method for administering an application by an administration system according to Claim 1, characterised in that, in order to create the agent in accordance with the administrative protocol, in a first stage the application is modelled in the form of a set of administrative objects, in a second stage the coding of said agent is effected according to an interface authorising the dialogue concerning the administrative objects between the administration system and the application concerned whereas in a third stage the description of the administrative objects is presented to the administration system by means of the configuration file contained in the agent.

3. Method for administering an application by an administration system according to Claim 1 or 2, characterised in that the configuration file contained in the agent created contains the list of variables, the list of objects and the correspondence between variables and objects.

4. Use of the method according to one of the preceding claims, the application running on a UNIX system, the agent, once created, controlling the launching of the application to be administered, the agent then corresponding to a "father" process while the application itself corresponds to a "son" process launched by the "father" process, then via the table of symbols and a system call of the UNIX PTRACE type, the agent performing the desired processing on the application.
